# EUROPÄISCHE PATENTANMELDUNG

(11) **EP 4 620 721 A1**
(43) Veröffentlichungstag der Anmeldung: **24.09.2025**
(21) Anmeldenummer: 25164616.2
(22) Anmeldetag: 19.03.2025
(51) Int. Cl.: B60L 53/10, B60L 53/24

(54) **SYSTEM ZUM LADEN EINER FAHRZEUGBATTERIE**

(30) Priorität: 21.03.2024 DE 102024108162; 17.05.2024 DE 102024113906
(71) Anmelder: AVL Software And Functions GmbH, 93059 Regensburg (DE)
(72) Erfinder: DEIML, Mathias, 93059 Regensburg (DE)
(74) Vertreter: Hannke, Christian

(57) **Zusammenfassung**

Die Erfindung betrifft eine Vorrichtung zum Schnellladen einer Batterie B, mit zwei Wechselrichterschaltungen W1, W2, die jeweils elektrisch mit einem dreiphasigen Elektromotor M1, M2 verbunden sind, wobei die Batterie B einerseits elektrisch mit einem Wechselrichter-Plus und andererseits mit einem Wechselrichter-Minus der Wechselrichterschaltungen W1, W2 verbunden ist, und mit einem Ladespannungsanschluss A1, A2, dessen Pluspol mit einem Mehrwegeschalter MS1, MS2, MS4, MS5, und dessen Minuspol mit dem Wechselrichter-Minus beider Wechselrichterschaltungen W1, W2 oder mit einem weiteren Mehrwegeschalter MS3 verbindbar ist, wobei über den einen Mehrwegeschalter MS1, MS2, MS4, M5 das Wechselrichter-Plus der beiden Wechselrichterschaltungen W1, W2 elektrisch anbindbar ist, wenigsten eine Induktivität L1 ... L3 des einen Elektromotors M1 elektrisch anbindbar ist, und über den einen Mehrwegeschalter MS1, MS2, MS4, MS5 oder über den weiteren Mehrwegeschalter MS3 wenigstens eine Induktivität L4 ... L6 des anderen Elektromotors M2 elektrisch anbindbar ist. Die Erfindung betrifft auch die bevorzugte Verwendung der Vorrichtung.

## Beschreibung

Die Erfindung betrifft das technische Gebiet der Leistungselektronik und insbesondere das Schnellladen einer Batterie gemäß Anspruch 1, vorzugsweise einer Automobilbatterie gemäß Anspruch 9.

Ein Elektrofahrzeug nutzt elektrische Energie als Hauptenergiequelle. Dementsprechend benötigt das Elektrofahrzeug im Wesentlichen eine Hochspannungsbatterie zur Speicherung elektrischer Energie, mindestens einen Motor und mindestens einen Wechselrichter zur Umwandlung der elektrischen Energie in Bewegungsenergie. Um die Effizienz des Antriebs des Elektrofahrzeugs zu erhöhen, werden vorzugsweise Batterien mit einer hohen Spannung verwendet. Dabei ist eine schnelle und effiziente Ladung derartiger Batterien notwendig.

Soll ein Elektrofahrzeug allerdings mit einer Batteriespannung von 800 V an einer Ladesäule geladen werden, kann die Ausgangsspannung der Ladesäule 500 V oder 800 V betragen. Mit einer Ladespannung von 800 V kann die Batterie direkt geladen werden. Eine Ladespannung von 500 V muss durch einen geeigneten Spannungsbooster / Hochsetzsteller erhöht werden. Üblicherweise wird dies durch einen zusätzlich zu dem Inverter und dem Elektromotor verbauten Spannungsbooster realisiert.

Eine Aufgabe der vorliegenden Erfindung besteht darin, eine schnelle Ladung einer Batterie auf einfachere und kostengünstigere Art und Weise zu realisieren.

Diese Aufgabe wird gelöst durch eine Vorrichtung zum Schnellladen einer Batterie, mit zwei Wechselrichterschaltungen, die jeweils elektrisch mit einem dreiphasigen Elektromotor verbunden sind, wobei die Batterie einerseits elektrisch mit einem Wechselrichter-Plus und andererseits mit einem Wechselrichter-Minus der Wechselrichterschaltungen verbunden ist, und mit einem Ladespannungsanschluss dessen Pluspol mit einem Mehrwegeschalter, und dessen Minuspol mit dem Wechselrichter-Minus beider Wechselrichterschaltungen oder mit einem weiteren Mehrwegeschalter verbindbar ist, wobei über den einen Mehrwegeschalter das Wechselrichter-Plus der beiden Wechselrichterschaltungen elektrisch anbindbar ist, und wenigsten eine Induktivität des einen Elektromotors elektrisch anbindbar ist, und über den einen Mehrwegeschalter oder über den weiteren Mehrwegeschalter wenigstens eine Induktivität des anderen Elektromotors elektrisch anbindbar ist.

Ein wesentlicher Punkt besteht dabei darin, die Ladespannung von 500 V auf 800 V zu boosten (hochzustellen), ohne dass hierfür ein zusätzlicher Spannungsbooster verbaut werden muss. Es werden dazu lediglich die ohnehin in einem Elektroauto verbauten Komponenten (Wechselrichter / Inverter und Elektromotor) verwendet, um die Ladespannung zu boosten. Insbesondere muss der Ladestrom in der vorgeschlagenen Schaltung über eine geringe Anzahl von Schaltern und Dioden fließen, so dass die elektrischen Verluste deutlich reduziert werden.

Vorteilhafte Weiterbildungen des erfindungsgemäßen Verfahrens sind in den Unteransprüchen angegeben.

In einer ersten vorteilhaften Ausführungsform ist es demnach vorgesehen, dass ein Ladespannungsanschluss-Plus und ein Ladespannungsanschluss-Minus auf getrennte Mehrwegeschalter elektrisch anschließbar sind, von denen über den einen Mehrwegeschalter eine Induktivität des einen Elektromotors und ein Wechselrichter-Plus elektrisch anbindbar, und über den weiteren Mehrwegeschalter eine Induktivität des anderen Elektromotors und ein Wechselrichter-Minus elektrisch anbindbar ist. Dadurch lassen sich die Mehrwegeschalter einfacher und kostengünstiger ausführen.

In einer zweiten vorteilhaften Ausführungsform ist es vorgesehen, dass der Mehrwegeschalter drei Dioden oder Schalter umfasst, über welche die jeweiligen Wechselrichterschaltungen und die jeweiligen Induktivitäten der Elektromotoren elektrisch anbindbar sind, was eine einfache und kostengünstige Bereitstellung eines Mehrwegeschalters ermöglicht. Die Schalter können dabei auch als Transistoren, IGBT (Insulated-Gate Bipolar Transistor) Leistungshalbleiter, oder als Schütze ausgestaltet sein. Bei dieser Schaltung ist eine Ladung bei 500 V und 800 V Ladespannung möglich.

In einer weiteren vorteilhaften Ausführungsform ist es vorgesehen, dass bei einem Ladebetrieb von 800 V oder von 500 V der Mehrwegeschalter zwei Dioden oder Schalter umfasst, die über Schalter einer jeweiligen Wechselrichterschaltung mit deren Wechselrichter-Plus elektrisch anbindbar sind, womit ein besonders einfacher und kostengünstiger Aufbau der Vorrichtung entsteht.

In einer weiteren vorteilhaften Ausführungsform ist es vorgesehen, dass jeweilige Kondensatoren das Wechselrichter-Plus der Wechselrichter und einen Knotenpunkt des Mehrwegeschalters und / oder das Wechselrichter-Minus der Wechselrichter und den Knotenpunkt des Mehrwegeschalters elektrisch, bevorzugt elektrisch schaltbar miteinander verbinden. Damit kann insbesondere eine Glättung der Eingangs- und Ausgangsspannungen der Wechselrichter / Inverter bewirkt werden.

In einer weiteren vorteilhaften Ausführungsform ist es vorgesehen, dass zusätzliche Induktivitäten im Eingangspfad eines Ladestroms vorgesehen sind, wodurch der Gesamtwert der Induktivitäten in den Strompfaden der Wechselrichter / Inverter erhöht wird. Bevorzugt ist es dabei, dass die zusätzlichen Induktivitäten in Stromrichtung vor oder hinter dem Mehrwegeschalter vorgesehen sind. Besonders bevorzugt ist dabei lediglich eine einzelne Induktivität vor dem Mehrwegeschalter eingefügt.

Grundsätzlich ist die Vorrichtung zum Schnellladen einer Batterie in jeder Art von elektrischen Antriebssystem nutzbar. Bevorzugt soll diese aber zum Schnellladen einer Automobilbatterie, insbesondere einer Automobilbatterie eines Elektrofahrzeugs verwendet werden.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen. Es zeigen:
- Figur 1: ein Schaltbild einer erfindungsgemäßen Vorrichtung zum Schnellladen einer Batterie;
- Figur 2: ein alternatives Schaltbild einer erfindungsgemäßen Vorrichtung zum Schnellladen einer Batterie;
- Figur 3: das Schaltbild der Figur 1 mit einem Mehrwegeschalter, bei dem die Dioden durch Schalter ersetzt sind;
- Figur 4: das Schaltbild der Figur 1 mit einem Mehrwegeschalter, mit lediglich zwei statt drei Dioden;
- Figur 5: das Schaltbild der Figur 1 mit zusätzlichen Kondensatoren;
- Figur 6a: das Schaltbild der Figur 1 mit zusätzlichen Induktivitäten, in Stromrichtung hinter dem Mehrwegeschalter;
- Figur 6b: das Schaltbild der Figur 1 mit zusätzlichen Induktivitäten, in Stromrichtung vor dem Mehrwegeschalter, und
- Figur 6c: das Schaltbild der Figur 4 mit zusätzlichen Induktivitäten, in Stromrichtung vor dem Mehrwegeschalter.

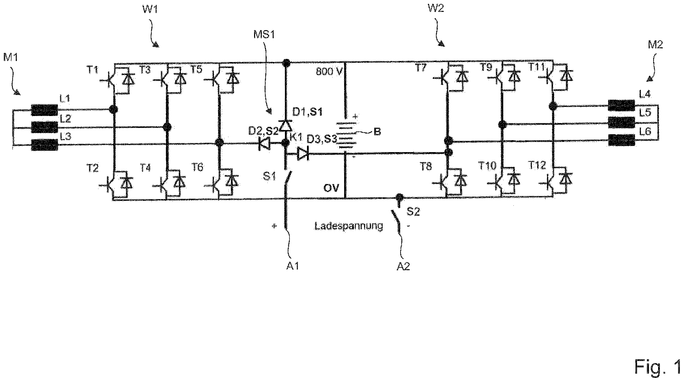

Die Figur 1 zeigt ein Schaltbild einer erfindungsgemäßen Vorrichtung zum Schnellladen einer Batterie B. In diesem Fall besitzt ein Elektroauto mindestens zwei Antriebe, jeweils bestehend aus einem Wechselrichter / Inverter W1, W2 und einem Elektromotor M1, M2.

Bei dieser Schaltung wird dabei nicht - wie in anderen Entwicklungen - über einen Motor-Sternpunkt eingespeist, sondern über eine Phase der Elektromotoren M1, M2. Hieraus ergibt sich der Vorteil, dass der Motor-Sternpunkt nicht herausgeführt werden muss. Erfindungsgemäß erfolgt der Stromfluss hier von einer Ladesäule über eine Phase der Elektromotoren M1, M2 zum Sternpunkt der jeweiligen Elektromotoren M1, M2. Ausgehend von dem Sternpunkt der Elektromotoren M1, M2 erfolgt der Stromfluss über 2 Phasen und getaktete Halbbrücken des Wechselrichters / Inverters W1, W2 zu der Batterie B. Dabei werden die Motorinduktivitäten L1 ... L6 vorteilhafterweise als Boost-Drosseln verwendet.

Der Wechselrichter / Inverter W1 umfasst Halbbrücken mit den Schaltelementen T1 bis T6, welche über eine Steuerungseinrichtung angesteuert werden können. Die Schaltelemente sind vorzugsweise Transistoren. Vorzugsweise sind die Schaltelemente T1 bis T6 IGBT (Insulated-Gate Bipolar Transistor) Leistungshalbleiter oder SIC (Silicium Carbid ) MOSFETS (Meta-Oxide-Semiconductor-Field-Effect-Transistor). Denkbar sind jedoch auch anderweitig geeignete ansteuerbare Schaltelemente. Die Motorinduktivität L1 ist mit der Halbrücke umfassend die Schaltelemente T1 und T2 verbunden. Die Motorinduktivität L2 ist mit der Halbrücke umfassend die Schaltelemente T3 und T4 verbunden. Die Motorinduktivität L3 ist mit der Halbrücke umfassend die Schaltelemente T5 und T6 verbunden. Entsprechend verhält es sich mit dem Wechselrichter / Inverter W2.

Um die Boostfunktion zu realisieren, ist ein Mehrwegeschalter MS1 mit Dioden D1, D2 und D3 zwischen den Wechselrichtern / Invertern W1, W2 verbaut. Um eine sichere Trennung der Ladekontakte im Fahrbetrieb zu gewährleisten, werden Schalter S1 und S2 eingesetzt, welche die Ladespannungsanschlüsse A1, A2 für die externe Spannungsversorgung schalten.

Im Ladebetrieb (bei 500 V oder 800 V) sind die Schalter S1 und S2 geschlossen. Im Fahrbetrieb sind sie geöffnet. Im Fahrbetrieb haben die Dioden D1 ... D3 keine Auswirkungen auf die Wechselrichter / Inverter W1, W2. Im Ladebetrieb mit einer Ladespannung von 800 V wird die Diode D1 leitend und der Ladestrom kann über Schalter S1 und Diode D1 sowie Schalter S2 die Batterie B laden.

Im Ladebetrieb mit einer Ladespannung von 500 V sperrt die Diode D1. Zum Boosten der Ladespannung wird der Ladestrom im linken Wechselrichter / Inverter W1 über Diode D2, Induktivität L3 und Induktivitäten L1 / L2 geführt. Die Schalter T1 ... T4 boosten die Ladespannung auf 800 V. Die Schalter T5 und T6 sind gesperrt. Im rechten Wechselrichter / Inverter W2 wird der Strom über Diode D3 und Induktivitäten L6, L5 / L4 geführt. Dabei boosten die Schalter T9 ... T12 die Spannung auf 800 V. Die Schalter T7 und T8 sind hierbei gesperrt.

Der Vorteil besteht dabei in der geringeren Anzahl an nötigen Schaltern. Zudem muss bei einer Ladespannung von 800 V der Ladestrom lediglich über die Diode D1 fließen, womit die Verluste deutlich reduziert werden.

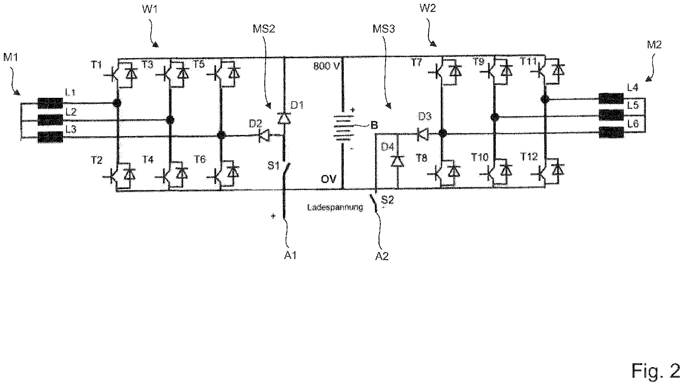

Die Figur 2 zeigt ein alternatives Schaltbild einer erfindungsgemäßen Vorrichtung zum Schnellladen einer Batterie B, die vorsieht, dass ein Ladespannung-PLUS über S1 auf die Dioden D1 und D2 eines Mehrwegeschalters MS2 angeschlossen ist. Ladespannung-MINUS ist über Schalter S2 auf Dioden D3 und D4 eines Mehrwegeschalters MS3 angeschlossen.

Im Ladebetrieb (bei 500 V oder 800 V) sind die Schalter S1 und S2 geschlossen. Im Fahrbetrieb sind sie geöffnet. Dabei werden im Ladebetrieb mit einer Ladespannung von 800 V die Dioden D1 und D4 leitend, womit der Ladestrom über einerseits S1 und D1, andererseits S2 und D4 die Batterie B laden kann.

Im Ladebetrieb mit einer Ladespannung von 500 V sperren die Dioden D1 und D4. Zum Boosten der Ladespannung wird der Ladestrom im linken Wechselrichter / Inverter W1 über Diode D2, Induktivität L3 und Induktivitäten L1 / L2 geführt. Die Schalter T1 ... T4 werden angesteuert. Die Schalter T5 und T6 sind gesperrt. Im rechten Wechselrichter / Inverter W2 wird der Strom über Diode D3 und Induktivitäten L6, L5 / L4 geführt. Die Schalter T9 ... T12 werden angesteuert. Die Schalter T7 und T8 sind hierbei gesperrt. Durch geeignete Ansteuerung der Schalter T1 ... T4 und T9 ... T12 wird die Eingangsspannung auf 800 V geboostet.

Grundsätzlich wäre die linke Seite der Vorrichtung mit Batterie B, Mehrwegschalter MS2, Wechselrichter / Inverter W1 und Motor M1 ebenfalls als Schnellladevorrichtung zum Boosten einer Ladespannung von 500 V auf 800 V nutzbar.

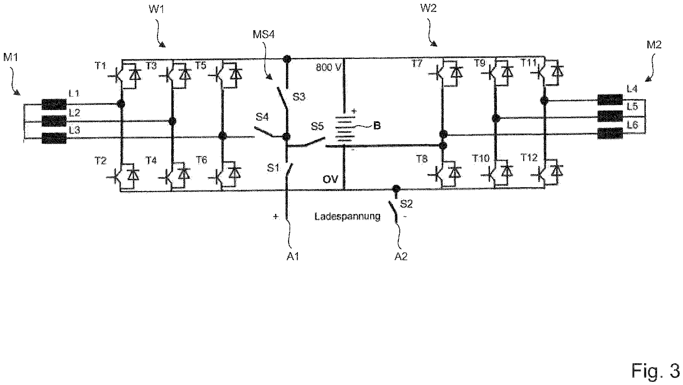

Die Figur 3 zeigt das Schaltbild der Figur 1 mit einem Mehrwegeschalter MS4, bei dem die Dioden D1 ... D3 durch Schalter S3 ... S5 ersetzt wurden, was eine gezieltere Ansteuerung der Schalter S3 ... S5 zulässt.

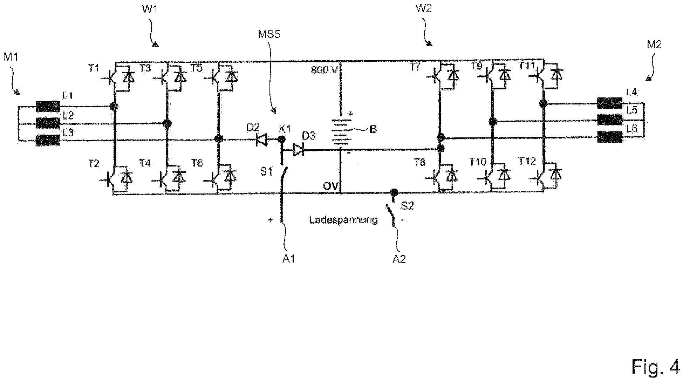

Die Figur 4 zeigt das Schaltbild der Figur 1 mit einem Mehrwegeschalter MS5, mit lediglich zwei statt drei Dioden D2, D3. Diese Schaltung ist damit ohne eine dritte Diode D1 aufgebaut, wobei der Strom im Ladebetrieb mit einer Spannung von 800 V einerseits über die Diode D2 und den Schalter T5, und andererseits über die Diode D3 und den Schalter T7 geführt wird. Bei dieser Schaltung ist eine Ladung bei 500 V und 800 V Ladespannung möglich. Der Unterschied zu der Schaltung in Figur 1 ist dabei, dass bei einer Ladung mit 800 V der Ladestrom zwar über mehr Bauteile wie die Diode D2 und den Schalter T5 beziehungsweise die Diode D3 und den Schalter T7 fließt. Der Vorteil besteht aber in der Einsparung der Diode D1, wobei eine Ladung mit 500 V Ladespannung genauso funktioniert wie bei der Schaltung in Figur 1. Dadurch entsteht ein besonders einfach aufgebauter und kostengünstiger Mehrwegeschalter MS5.

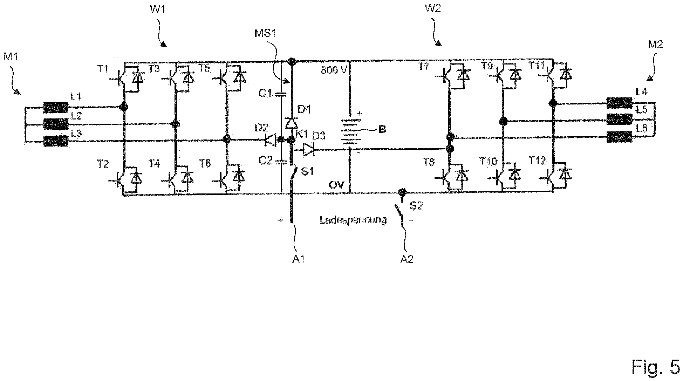

Die Figur 5 zeigt das Schaltbild der Figur 1 mit zusätzlichen Kondensatoren C1, C2. Diese sind zur Glättung der Eingangs- und Ausgangsspannung der Booster-Schaltungen am Knotenpunkt K1 angeschlossen werden. Dabei können die Kondensatoren C1, C2 direkt mit dem Knotenpunkt K1 verbunden oder über einen Schalter schaltbar verbunden sein.

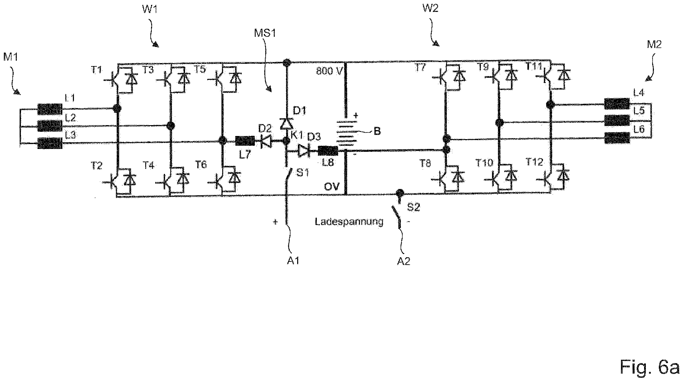

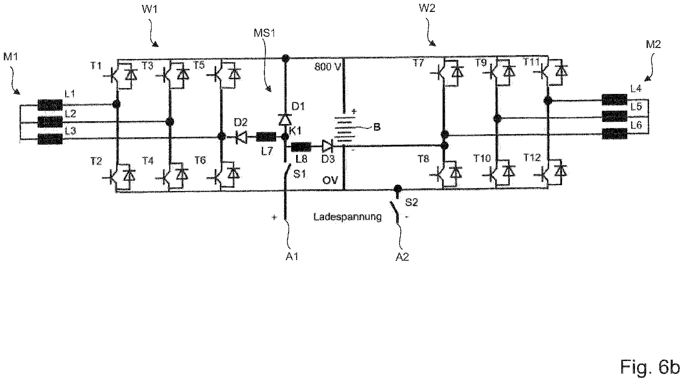

Die Figur 6a zeigt das Schaltbild der Figur 1 mit zusätzlichen Induktivitäten L7, L8, in Stromrichtung hinter dem Mehrwegeschalter MS5. Durch zusätzliche Induktivitäten im Eingangspfad des Ladestromes kann der Gesamtwert der Induktivitäten der beiden Booster-Schaltungen erhöht werden. Die zusätzlichen Induktivitäten L7 und L8 können hier entweder zwischen dem Knotenpunkt K1 und D2 und D3 oder zwischen Mittelabgriff der Halbbrücken und D2 und D3 eingefügt werden. Die Figur 6b zeigt das Schaltbild der Figur 1 mit zusätzlichen Induktivitäten, in Stromrichtung vor dem Mehrwegeschalter MS1.

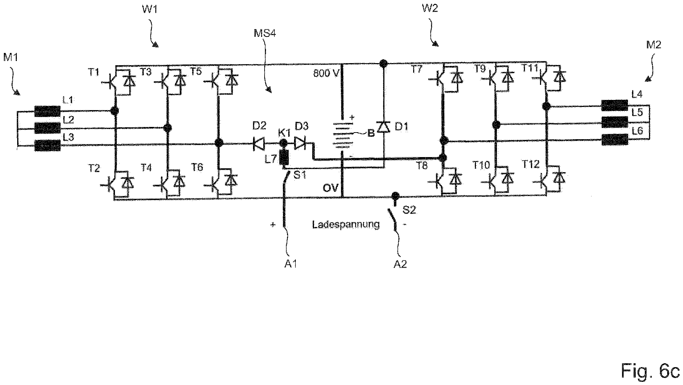

Die Figur 6c zeigt das Schaltbild der Figur 4 mit einer zusätzlichen einzelnen Induktivität L7, in Stromrichtung vor dem Mehrwegeschalter MS4. Diese ist hier zwischen der Anode von Diode D2 und Diode D3 und dem Knotenpunkt K1 eingefügt. Die Diode D1 ist dabei zwischen Knotenpunkt K1 und einem Batterie-PLUS angeschlossen.

Insgesamt ergibt sich mit der erfindungsgemäßen Vorrichtung zum Schnellladen einer Batterie damit ein einfaches und flexibles, zudem kostengünstiges und insbesondere für Elektrofahrzeuge geeignetes Ladesystem, dass bereitgestellte Spannungen von 500 V oder 800 V problemlos nutzen kann.

### Bezugszeichenliste

- B: Batterie
- C1, C2: Kondensatoren
- MS1 ... MS5: Mehrwegeschalter
- K1: Knotenpunkt
- L1 ... L8: Induktivitäten
- M1, M2: Elektromotoren
- A1, A2: Ladespannungsanschluss
- S1 ... S5: Schalter
- T1 ... T12: Schalter
- W1, W2: Wechselrichterschaltungen / Inverter

## Patentansprüche

1. Vorrichtung zum Schnellladen einer Batterie (B), mit zwei Wechselrichterschaltungen (W1, W2), die jeweils elektrisch mit einem dreiphasigen Elektromotor (M1, M2) verbunden sind, wobei die Batterie (B) einerseits elektrisch mit einem Wechselrichter-Plus und andererseits mit einem Wechselrichter-Minus der Wechselrichterschaltungen (W1, W2) verbunden ist, und mit einem Ladespannungsanschluss (A1, A2), dessen Pluspol mit einem Mehrwegeschalter (MS1, MS2, MS4, MS5), und dessen Minuspol mit dem Wechselrichter-Minus beider Wechselrichterschaltungen (W1, W2) oder mit einem weiteren Mehrwegeschalter (MS3) verbindbar ist, wobei über den einen Mehrwegeschalter (MS1, MS2, MS4, M5) das Wechselrichter-Plus der beiden Wechselrichterschaltungen (W1, W2) elektrisch anbindbar ist, und wenigsten eine Induktivität (L1 ... L3) des einen Elektromotors (M1) elektrisch anbindbar ist, und über den einen Mehrwegeschalter (MS1, MS2, MS4, MS5) oder über den weiteren Mehrwegeschalter (MS3) wenigstens eine Induktivität (L4 ... L6) des anderen Elektromotors (M2) elektrisch anbindbar ist.

2. Vorrichtung nach Anspruch 1, **dadurch gekennzeichnet, dass** ein Ladespannungsanschluss-Plus (A1) und ein Ladespannungsanschluss-Minus (S2) auf getrennte Mehrwegeschalter (MS2, MS3) elektrisch anschließbar sind, von denen über den einen Mehrwegeschalter (MS2) eine Induktivität (L3) des einen Elektromotors (M1) und ein Wechselrichter-Plus elektrisch anbindbar, und über den weiteren Mehrwegeschalter (MS3) eine Induktivität (L6) des anderen Elektromotors (M2) und ein Wechselrichter-Minus elektrisch anbindbar ist.

3. Vorrichtung nach Anspruch 1, **dadurch gekennzeichnet, dass** der eine Mehrwegeschalter (MS1) drei Dioden (D1 ...D3) oder Schalter (S3 ... S5) umfasst, über welche die jeweiligen Wechselrichterschaltungen (W1, W2) und die jeweiligen Induktivitäten (L3, L6) der Elektromotoren (M1, M2) elektrisch anbindbar sind.

4. Vorrichtung nach Anspruch 1, **dadurch gekennzeichnet, dass** bei einem Ladebetrieb von 800 V oder von 500 V der eine Mehrwegeschalter (MS5) zwei Dioden (D1, D2) umfasst, die über Schalter (T5, T7) einer jeweiligen Wechselrichterschaltung (W1, W2) mit deren Wechselrichter-Plus elektrisch anbindbar sind.

5. Vorrichtung nach einem der vorstehenden Ansprüche, **dadurch gekennzeichnet, dass** jeweilige Kondensatoren (C1, C2) das Wechselrichter-Plus der Wechselrichter (W1, W2) und einen Knotenpunkt (K1) des einen Mehrwegeschalters (MS1) und / oder das Wechselrichter-Minus der Wechselrichter (W1, W2) und den Knotenpunkt (K1) des einen Mehrwegeschalters (MS1) elektrisch, bevorzugt elektrisch schaltbar miteinander verbinden.

6. Vorrichtung nach einem der vorstehenden Ansprüche, **dadurch gekennzeichnet, dass** zusätzliche Induktivitäten (L7, L8) im Eingangspfad eines Ladestroms vorgesehen sind.

7. Vorrichtung nach Anspruch 6, **dadurch gekennzeichnet, dass** die zusätzlichen Induktivitäten (L7, L8) in Stromrichtung vor oder hinter dem einen Mehrwegeschalter (MS1) vorgesehen sind.

8. Vorrichtung nach Anspruch 6, **dadurch gekennzeichnet, dass** eine einzelne zusätzliche Induktivität (L7) in Stromrichtung vor dem einen Mehrwegeschalter (MS4) vorgesehen ist.

9. Verwendung einer Vorrichtung nach einem der vorstehenden Ansprüche zum Schnellladen einer Automobilbatterie, insbesondere der Automobilbatterie eines Elektrofahrzeugs.
